# EUROPEAN PATENT SPECIFICATION

(11) **EP 0 502 486 B1**
(45) Date of publication and mention of the grant of the patent: **07.12.1994**
(21) Application number: 92103640.6
(22) Date of filing: 03.03.1992
(51) Int. Cl.: F16L 41/08, F16L 5/00, F16L 13/14

(54) **Method for connecting at least one delivery duct to the muffler of a motor-compressor unit, and the motor-compressor unit obtained**
Methode zur Verbindung wenigstens einer Förderleitung mit dem Schalldämpfer einer Motor-Kompressoreinheit, und Motor-Kompressor
Méthode pour connexion au moins d'un tuyau de transport avec l'amortisseur de bruit d'un motocompresseur unité, et le motocompresseur

(30) Priority: 05.03.1991 IT MI910569
(43) Date of publication of application: 09.09.1992
(73) Proprietor: WHIRLPOOL EUROPE B.V., 5507 SK Veldhoven (NL)
(72) Inventor: Bianchi, Vittorio, Ferrera di Varese (IT)
(74) Representative: Guerci, Alessandro

(56) References cited:
- EP-A- 0 255 221
- AT-B- 329 336
- DE-C- 4 007 892

## Description

The present invention relates to a method for connecting a fluid duct to a muffler in a motor-compressor unit comprising inserting said duct through a sleeve member and positioning the latter within an aperture provided in the body of the muffler said positioning being such that both the opposing ends of said sleeve member project from said aperture and deforming said sleeve member so as to obtain the adhesion of the sleeve member to the opposing walls of the edge of said body in which said aperture is provided.

AT-B-329 336 discloses a method for connecting a duct to a pipe by positioning a sleeve member within an aperture provided in the wall of the pipe and inserting the duct through this sleeve member thereby deforming the sleeve member in such a way that an adhesion of the sleeve member to the walls of the aperture is obtained.

In this known method the sleeve member is made of an elastic material such as a plastic material and the duct is provided with a threaded portion that is screwed into the sleeve member in order to deform the sleeve member in such a way that a fluid tight connection between the duct and the wall of the pipe is obtained.

Although a good connection between the duct and the pipe is obtained this construction has a disadvantage in that it cannot easily be automated due to the fact that the duct has to be screwed into the sleeve member and the duct has to be provided with a collar that presses against one end of the sleeve member. Because of the fact that the sleeve member is of an elastically deformable material this material has to be kept under a constant pressure in order to ensure the fluid tightness of the connection.

In order to avoid these disadvantages it is also known to fix the fluid duct to the muffler body by welding.

This obviously increases the construction time and cost of the motor-compressor unit with a corresponding increase in its selling price.

In addition, the welding operation, even if conducted very carefully, can damage both the duct and the muffler, and can also result in fluid leakage during its compression.

Other means of connecting the delivery duct to the muffler body are also known. These however are laborious in terms of their execution and sometimes result in a considerable increase in the muffler thickness following the duct connection.

An object of the invention is to provide a method for connecting the delivery duct to the muffler which is simple to implement and does not involve the aforesaid drawbacks of analogous known methods.

A further object is to provide a connection between the duct and muffler which can be made in a relatively short time, said connection not resulting in any possibility of fluid leakage from the muffler during its movement towards said duct.

A further object is to provide a connection between the muffler and the duct in a motor compressor unit which can be made in a reliable and effective manner.

The above objects are obtained by a method which is characterised in that the sleeve member is made of a plastically deformable material and that the deformation there of is achieved by pressing against the opposing ends in opposite directions such that the deformation of the sleeve member results in the contraction of a part of the duct contained in said sleeve member.

Due to the fact the sleeve member is made of a plastically deformable material the deformation can be carried through by means of an appropriate pressing tool which does not form part of the duct or the muffler and can be removed after the deformation is performed without destroying the connection between the duct and the muffler.

Due to the high pressures performed by the pressing tool the part of the duct in the sleeve is also slightly deformed so that a contraction of this part is obtained.

The present invention also relates to a motor-compressor unit in which the connection between a muffler and a fluid duct is obtained by the method as herebefore described.

The invention will be described in more detail with reference to the accompanying drawing in which:
Figure 1 is a cross-section through part of a motor-compressor unit constructed in accordance with the invention.
Figure 2 is a section through that part of the motor-compressor unit shown in Figure 1 during a first stage in the execution of the method according to the invention; and
Figure 3 is a view similar to that of Figure 2 but during a different stage in the execution of the method according to the invention.

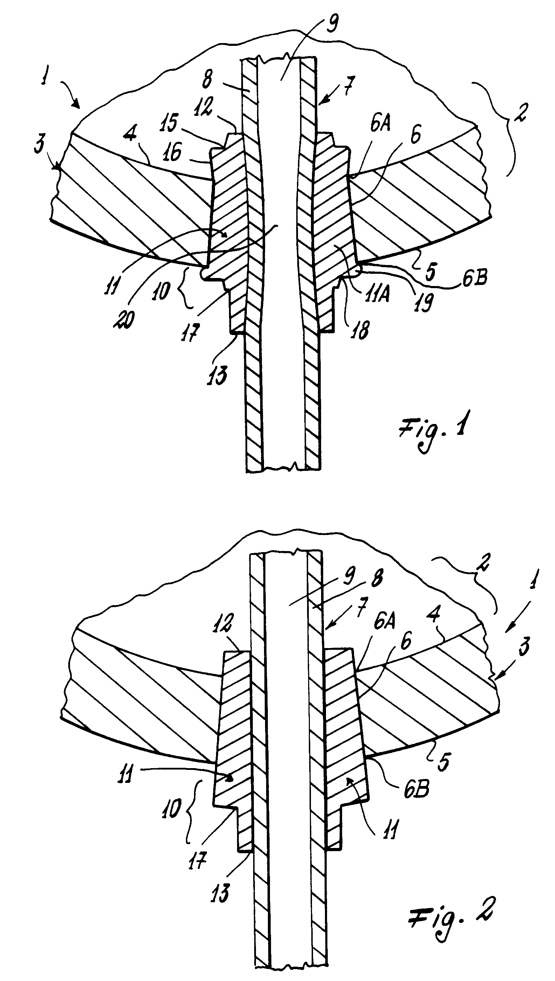

With reference to Figure 1, a motor-compressor unit, in particular for refrigerators, comprises a usual muffler 1 defined by a hollow body 2 having a perimetral edge 3 with an inner wall 4 and an outer wall 5.

In the edge 3 an aperture 6 is formed to contain a usual duct 7, this being specifically a delivery duct for the compressed fluid.

This duct comprises a wall 8 defining a passage 9.

According to the invention the duct 7 is inserted through a sleeve member 10 comprising a body 11 provided with opposing ends 12 and 13. This body is inserted through the aperture 6 so that it extends beyond its mouths 6A and 6B, into the body 2 of the muffler 1 and away from it respectively.

In proximity to that end 12 which projects into the body 2 of the muffler 1 there is provided a step 15 defining a collar 16 resting to form a seal against the inner wall 4 of said body at the mouth 6A of the aperture 6.

Likewise, in proximity to the end 13 of the sleeve member 10 (or simply sleeve) there are provided in succession a first step 17 and a second step 18. This latter defines a collar 19 resting to form a seal against the outer wall 5 of the body 2 at the mouth 6B of the aperture 6.

In addition, the body 11 of the sleeve 10 comprises a portion 11A positioned within said aperture 6. This portion tapers in passing from the mouth 6B to the mouth 6A of said aperture and is in sealed contact with the wall of this latter.

At said portion 11A of the sleeve 10 the duct 7 comprises a part 20 of reduced cross-section. This duct therefore assumes within the sleeve 10 a venturi tube formation which offers considerable obvious advantages during the use of the motor-compressor unit 1, these advantages deriving precisely from the shape of said duct 7.

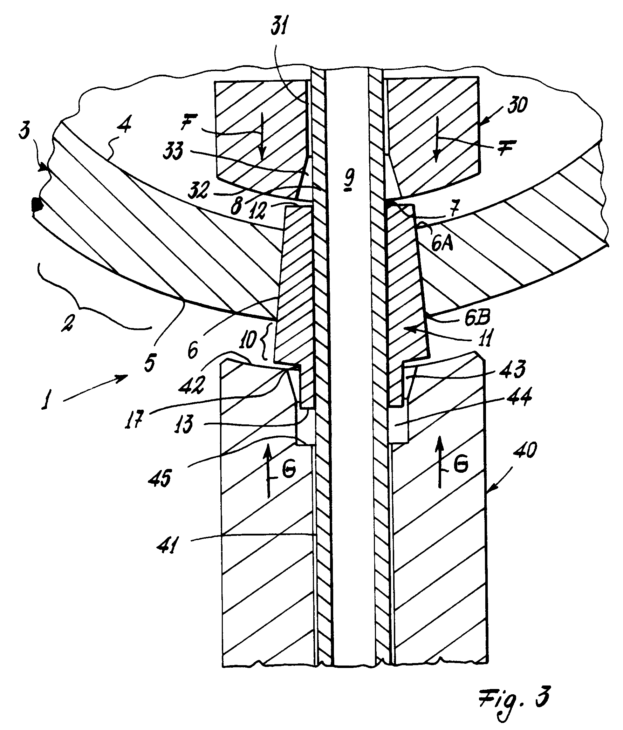

The motor-compressor unit 1 and in particular the connection between the duct 7 and the muffler 2 are formed in accordance with the method of the invention, this method being described with reference to Figures 2 and 3. In these figures, parts corresponding to those of Figure 1 are indicated by the same reference numerals.

The first stage of forming the connection between the duct 7 and the muffler 2 (Figure 2) involves inserting the duct through the sleeve 10, after which the assembly formed is inserted through the aperture 6.

As can be seen the sleeve is substantially of frusto-conical shape so that during its insertion into the aperture 6 its body 11 fits with interference against the wall of this aperture.

Its insertion continues until the the body 11 projects from both mouths 6A and 6B of the aperture 6.

After this the sleeve 10 is deformed mechanically such that it assumes the described shape shown in Figure 1.

To achieve this, known pressing tools 30 and 40 are used, acting respectively on the opposing ends 12 and 13 of the sleeve 10.

The tools 30 and 40 comprise respective elongate holes 31 and 41 which receive the duct 7 and open into the faces 32 and 42 of said tools, these faces being arranged to cooperate with the corresponding ends 12 and 13 of the sleeve 10.

Said faces 32 and 42 are convex and concave respectively, and comprise flares 33 and 43 corresponding with the holes 31 and 41.

To allow proper engagement by the tool 40, the end 18 of the body 11 of the sleeve 10 is made slightly concave.

In addition, the flare 43 of the tool 40 connects to a cavity 44 into which the hole 41 opens, this hole having the same shape as the duct 7 but an obviously greater cross-section.

For the deformation of the sleeve 10 (represented in Figure 3), the tool 40 is applied to the end 13 of the sleeve 10 while at the same time the tool 30 is applied to the end 12 of this sleeve.

By now forcing the tools 30 and 40 together (ie pressing them towards the edge 3 of the muffler 1 in the direction of the arrows F and G), the sleeve 10 is deformed to obtain the shape shown in Figure 1.

During this operation the body 11 of the sleeve deforms to press against the duct 7. Specifically, the pressure on the portion 11A of this body modifies the shape of the part 20 of said duct, making it assume a venturi tube shape.

The deformation is complete when a step 45 provided between the cavity 44 and the hole 41 rests against the end 13.

During this deformation, collars 16 and 19 are created, positioned at the walls 4 and 5 of the edge 3 of the body 1.

The sleeve 10 is made of a plastically deformable material, so that the creation of the collars 16 and 19 and the deformation of its body 11 create a seal about the aperture 6 in the edge 3.

By this method a duct (the delivery duct) can be connected to the body of a muffler in a motor-compressor unit without using welding or mechanical operations which could damage the parts to be connected together or require additional machining of these parts to enable them to be connected together.

Furthermore, said method enables the connection to be obtained quickly and reliably.

## Claims

1. A method for connecting a fluid duct to a muffler in a motor-compressor unit, comprising inserting said duct (7) through a sleeve member (10), positioning the latter within an aperture (6) provided in the body (2) of the muffler (1), said positioning being such that both the opposing ends of said sleeve member (10) project from said aperture, and deforming said sleeve member (10) so as to obtain the adhesion of the sleeve member (10) to the opposing walls (4, 5) of the edge (3) of said body (2) in which said aperture is provided, characterised in that the sleeve member (10) is made of a plastically deformable material and that the deformation thereof is achieved by pressing against the opposing ends (12, 13) in opposite directions such that the deformation of the sleeve member (10) results in the contraction of a part (20) of the duct (7) contained in said sleeve member (10).

2. A motor-compressor unit, comprising a muffler (1), an intake duct and a delivery duct (7) for conveying a fluid into a muffler body and for removing it from this latter respectively, wherein the delivery duct (7) is inserted through a sleeve member (10) positioned within an aperture (6) in the body (2) of the muffler (1) so that its opposing ends (12, 13) project from said aperture (6), said sleeve member (10) comprising at each opposing mouth or edge (6A, 6B) of said aperture (6) a collar (16, 19) cooperating with those walls (4, 5) of the body (2) of the muffler (1) corresponding with said mouth (6A, 6B) so as to retain the duct (7) secured to the muffler (1) and to create a seal about it characterised in that the sleeve member (10) is made of a plastically deformable material and that part (20) of the duct (7) contained within the sleeve member (10) is of venturi tube shape.

3. A motor-compressor unit as claimed in claim 2, characterised in that the portion (11A) of the body (11) of the sleeve member (10) is inserted with an interference fit into the aperture (6) in the body (2) of the muffler (1) and cooperates in a sealed manner with the wall of said aperture (6).

## Patentansprüche

1. Verfahren zur Verbindung eines Fluidrohrs mit einem Schalldämpfer in einem Motorkompressor, bei dem das Fluidrohr (7) durch ein Muffenglied (10) geführt und das Muffenglied in einer im Körper (2) des Schalldämpfers (1) vorgesehenen Öffnung (6) positioniert wird, wobei diese Positionierung so vorgenommen wird, daß die entgegengesetzten Muffengliedenden aus der Öffnung herausragen, und bei dem das Muffenglied (10) so verformt wird, daß es an entgegengesetzten Wänden (4, 5) an der Kante (3) des die Öffnung aufweisenden Schalldämpferkörpers (2) haftet, **dadurch gekennzeichnet**, daß das Muffenglied (10) aus plastisch verformbarem Material besteht und daß die Verformung des Muffenglieds dadurch erreicht wird, daß auf die entgegengesetzten Enden in entgegengesetzten Richtungen derart gedrückt wird, daß die Verformung des Muffenglieds (10) zu einer Kontraktion eines im Muffenglied (10) enthaltenen Teils (20) des Rohrs (7) führt.

2. Motorkompressor mit einem Schalldämpfer (1), einem Einlaßrohr und einem Auslaßrohr (7) zum Transportieren eines Fluids in einen bzw. aus einem Schalldämpferkörper, wobei das Auslaßrohr (7) durch ein in einer Öffnung (6) im Körper (2) des Schalldämpfers (1) vorgesehenes Muffenglied (10) derart geführt wird, daß dessen entgegengesetzte Enden (12, 13) aus der Öffnung (6) herausragen, und wobei das Muffenglied (10) an entgegengesetzten Mündungen (6A, 6B) der Öffnung (6) jeweils einen Bund (16, 19) aufweist, der mit derjenigen Wand (4, 5) des Körpers (2) des Schalldämpfers (1) zusammenarbeitet, die zur Mündung (6A, 6B) gehört, so daß das Rohr (7) am Schalldämpfer (1) befestigt und um das Rohr eine Abdichtung erzielt wird, **dadurch gekennzeichnet**, daß das Muffenglied (10) aus plastisch verformbarem Material gefertigt ist und daß ein Teil (20) des im Muffenglied (10) angeordneten Rohrs (7) die Form eines Venturi-Rohrs hat.

3. Motorkompressor nach Anspruch 2, dadurch gekennzeichnet, daß der Teil (11A) des Körpers (11) des Muffenglieds (10) mit Spiel in die Öffnung (6) im Körper (2) des Schalldämpfers (1) eingeführt ist und mit der Wand der Öffnung (6) in abdichtender Weise zusammenarbeitet.

## Revendications

1. Procédé pour raccorder un conduit de fluide à un silencieux dans une unité moteur-compresseur, comprenant les opérations consistant à : introduire ledit conduit (7) à travers un organe de fourreau (10), à positionner ce dernier à l'intérieur d'une ouverture (6) prévue dans le corps (2) du silencieux (1), ledit positionnement étant tel que les deux extrémités opposées dudit organe de fourreau (10) se projettent depuis ladite ouverture, et à déformer ledit organe de fourreau (10) de manière à obtenir l'adhésion dudit organe de fourreau (10) sur les parois opposées (4, 5) de la bordure (3) dudit corps (2) dans lequel est prévue ladite ouverture, caractérisé en ce que l'organe de fourreau (10) est réalisé en un matériau plastiquement déformable, et en ce que la déformation de celui-ci est assurée en pressant contre les extrémités opposées (12, 13) dans des directions opposées de telle manière que la déformation de l'organe de fourreau (10) a pour résultat la contraction d'une partie (20) du conduit (7) contenu dans ledit organe de fourreau (10).

2. Unité moteur-compresseur comprenant un silencieux (1), un conduit d'admission et un conduit de refoulement (7) pour transporter un fluide à l'intérieur d'un corps de silencieux et pour l'extraire de celui-ci, respectivement, dans laquelle le conduit de refoulement (7) est introduit à travers un organe de fourreau (10) positionné à l'intérieur d'une ouverture (6) dans le corps (2) du silencieux (1) de sorte que ses extrémités opposées (12, 13) se projettent depuis ladite ouverture (6), ledit organe de fourreau (10) comprenant à chaque embouchure ou bordure opposée (6A, 6B) de ladite ouverture (6) un collier (16, 19) qui coopère avec les parois (4, 5) du corps (2) du silencieux (1) qui correspondent auxdites embouchures (6A, 6B) de façon à retenir le conduit (7) fixé au silencieux (1), et à créer un joint autour de celui-ci, caractérisée en ce que l'organe de fourreau (10) est réalisé en une matière plastiquement déformable, et en ce qu'une partie (20) du conduit (7) contenue à l'intérieur de l'organe de fourreau (10) a la forme d'un tube Venturi.

3. Unité moteur-compresseur selon la revendication 2, caractérisée en ce que la partie (11A) du corps (11) de l'organe de fourreau (10) est introduite sous un montage serré à l'intérieur de l'ouverture (6) dans le corps (2) du silencieux (1) et coopère d'une façon étanche avec la paroi de ladite ouverture (6).
